# EUROPÄISCHE PATENTSCHRIFT

(11) **EP 1 837 576 B1**
(45) Veröffentlichungstag und Bekanntmachung des Hinweises auf die Patenterteilung: **22.04.2009**
(21) Anmeldenummer: 07102611.6
(22) Anmeldetag: 19.02.2007
(51) Int. Cl.: F16L 21/03

(54) **Einrichtung zur Herstellung einer Dichtanordnung für Rohre und Schachtbauwerke**
Device for manufacturing a sealing assembly for pipes and tunnel constructions
Dispositif de fabrication d'un agencement d'étanchéité pour tuyaux et constructions de puits

(30) Priorität: 23.03.2006 DE 102006013350
(43) Veröffentlichungstag der Anmeldung: 26.09.2007
(73) Patentinhaber: Phoenix Dichtungstechnik GmbH, 99880 Waltershausen (DE)
(72) Erfinder: Höft, Heiko, 21224 Rosengarten (DE); Mehl, Helmut, 35781 Weilburg (DE)
(74) Vertreter: Pohl, Manfred

(56) Entgegenhaltungen:
- EP-A2- 0 449 082
- WO-A-95/16872
- DE-A1- 4 108 107

## Beschreibung

Die Erfindung betrifft eine Dichtanordnung für Rohre und Schachtbauwerke unter Verwendung einer Untermuffe sowie weiteren Verschalungsformteilen, wobei die Dichtanordnung folgende Bauteile umfasst:
- eine Muffe, umfassend einen Muffengrund und Muffenspiegel, aus Beton, Stahlbeton oder einem anderen aushärtbaren Material (z.B. Kunstharze);
- einen Dichtring aus polymerem Werkstoff, umfassend ein Dichtteil und Schalungsteil mit einem mit dem Muffenspiegel korrespondierenden Schalungsteilende, das wiederum einen Enddichtpunkt aufweist, wobei das Schalungsteil insbesondere härter ist als das Dichtteil.

Der Dichtring ist dabei auf die Untermuffe aufgezogen, wobei ferner die Untermuffe eine Basiskontaktfläche für das Schalungsteil, die zugleich die Längserstreckungsrichtung des Dichtringes umfasst, sowie einen sich an die Basiskontaktfläche anschließenden Segmentbereich, umfassend eine erste und zweite Segmentbegrenzung, aufweist, der mit dem Schalungsteilende und dem Enddichtpunkt in Verbindung steht, wobei der Segmentbereich bei einem vorgegebenen Radius und einer winkelbezogenen Bogenlänge, beginnend von der senkrecht zur Basiskontaktfläche verlaufenden ersten Segmentbegrenzung, insbesondere als Kreissegment ausgebildet ist.

Eine gattungsgemäße Einrichtung, bei der im Rahmen des Verschalungsvorganges der Dichtring vorzugsweise fest in der Muffe verankert wird (integrierte Dichtung), ist bekannt, wobei insbesondere auf folgenden Stand der Technik verwiesen wird:
- In den Patentschriften DE 29 35 392 C2, DE 35 07 909 C2 und DE 38 08 450 C2 werden Dichtringe vorgestellt, bei denen das Dichtteil und das Schalungsteil separate Ringbauteile sind. Das Dichtteil als dann wirksamer Dichtring besteht aus elastomerem Werkstoff, der im Muffengrund verankert ist. Das Schalungsteil als Hilfsring besteht zumeist aus Hartgummi oder einem Kunststoff mit zellularer Struktur (z.B. Styropor). Dieser Hilfsring wird nach der Verschalung und nach dem Transport, wo er als Schutzelement wirkt, entfernt, so dass zwischen dem wirksamen Dichtring und dem Muffenspiegel ein Freiraum gebildet wird. Der Hilfsring kann dabei häufig wieder verwendet werden. Hinsichtlich der einzelnen Verschalungsformteile, wobei die Untermuffe von zentraler Bedeutung ist, wird auf die Patentschrift DE 38 08 450 C2 (Fig. 2) verwiesen, wo das Zusammenwirken dieser Formteile bei der Herstellung der Dichtanordnung detailliert beschrieben wird.
- In den Patentschriften DE 33 45 569 C2 und EP 0 449 082 B1 werden einteilige verankerte Dichtringe aus elastomerem Werkstoff vorgestellt. Das Schalungsteil ist also als zweites Dichtteil ein integriertes Teil der Gesamtdichtung und hat neben der Verschalungsfunktion eine zusätzliche Dichtfunktion. Derartige einteilige Dichtringe sind zumeist mit einem Kragen versehen. Die Verankerung erfolgt dabei im Muffengrund einerseits als auch kragenseitig im Muffenspiegel. Hinsichtlich dieser Verankerungskonzeption wird insbesondere auf die Patentschrift EP 0 449 082 B1 (Fig. 1) verwiesen.
- Von zunehmender Bedeutung sind einteilige Dichtringe, gebildet durch Co-Extrusion von Dichtteil und Schalungsteil. Derartige Co-Extrudate haben den Vorteil, dass diese entsprechend dem Anwendungsfall aus unterschiedlichen Werkstoffen zusammengesetzt werden können, beispielsweise in Form einer Hart-Weich-Kombination. Auch können Elastomere, thermoplastische Elastomere und Thermoplaste miteinander kombiniert werden. Diesbezügliche werkstoffmäßige Details sind in der Offenlegungsschrift EP 1 571 386 A2 beschrieben.

Wie bereits oben erwähnt sind einteilige Dichtringe, die einstückig oder als Co-Extrudate ausgebildet sind, zumeist mit einem Kragen versehen, der zudem eine erhebliche Erstreckungsdimension aufweisen kann. Diesbezüglich wird insbesondere auf die Patentschrift EP 0 449 082 B1 (Fig. 2) verwiesen.

Die Offenlegungsschrift DE 4 108 107 A1 beschreibt einen Dichtungsring mit einem Verhältnismäßig kurzen Kragen.

Im Rahmen einer Weiterentwicklung besteht die Aufgabe darin, eine Einrichtung bereitzustellen, mit der es möglich ist, kragenarme Dichtringe in das Verschalungskonzept einzubeziehen, insbesondere unter dem Aspekt, dass das mit dem Kragen in Verbindung stehende Schalungsteil, insbesondere wiederum bei der Co-Extrusion, in der Regel härter ist als das Dichtteil.

Gelöst wird diese Aufgabe dadurch, dass in Bezug auf den Segmentbereich bzw. auf das Kreissegment mit dem vorgegebenen Radius
- das Schalungsteilende innerhalb einer ersten Bogenlänge von 0 bis 45° und
- der Enddichtpunkt innerhalb einer zweiten Bogenlänge von 0 bis 70°
auf der Untermuffe zu liegen kommen, wobei die erste und zweite Bogenlänge insbesondere > 0° sind.

Zweckmäßige Gestaltungsvarianten werden in den Patentansprüchen 2 bis 7 genannt.

Die Erfindung wird nun anhand von Ausführungsbeispielen unter Bezugnahme auf schematische Zeichnungen erläutert. Es zeigen:
Fig. 1 eine Einrichtung mit einer Untermuffe, auf die ein verankerter Dichtring aufgezogen ist, sowie weitere Verschalungsformteile;
Fig. 2 eine Dichtanordnung, umfassend eine Muffe aus Beton und einen Dichtring;
Fig. 3 einen einteiligen verankerten Dichtring als Co-Extrudat;
Fig. 4 eine Untermuffe, auf die der Dichtring gemäß Fig. 3 aufgezogen ist, unter Einbezug einer modifizierten Variante;
Fig. 5 eine Variante eines Kragens mit Enddichtpunkt;
Fig. 6 eine weitere Variante eines Kragens mit Enddichtpunkt;
Fig. 7 einen einteiligen verankerten Dichtring als Einheitsextrudat;
Fig. 8 einen einteiligen verankerten Dichtring als Co-Extrudat;
Fig. 9 einen einteiligen unverankerten Dichtring als Co-Extrudat.

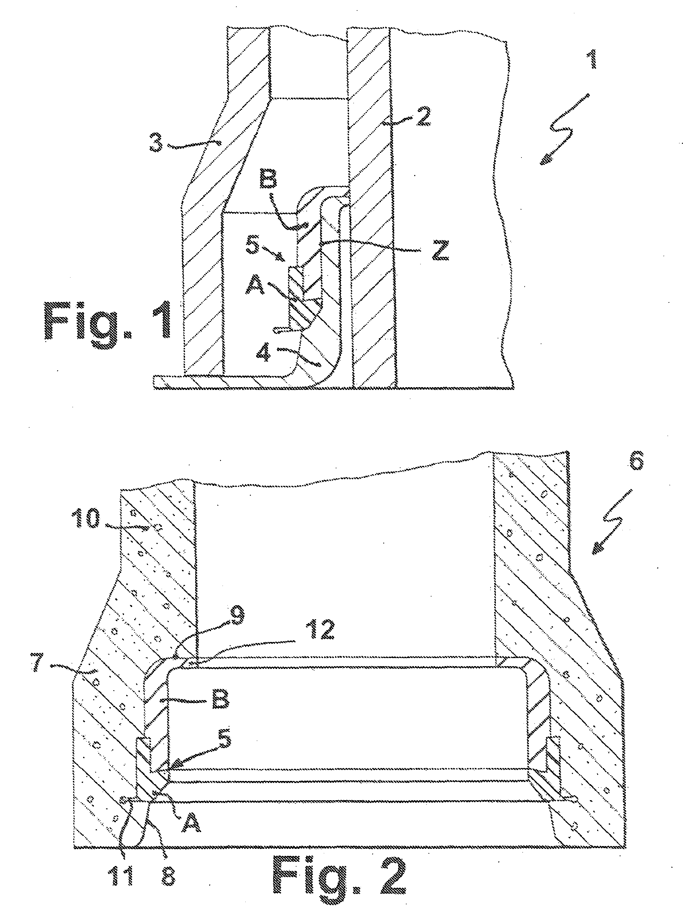

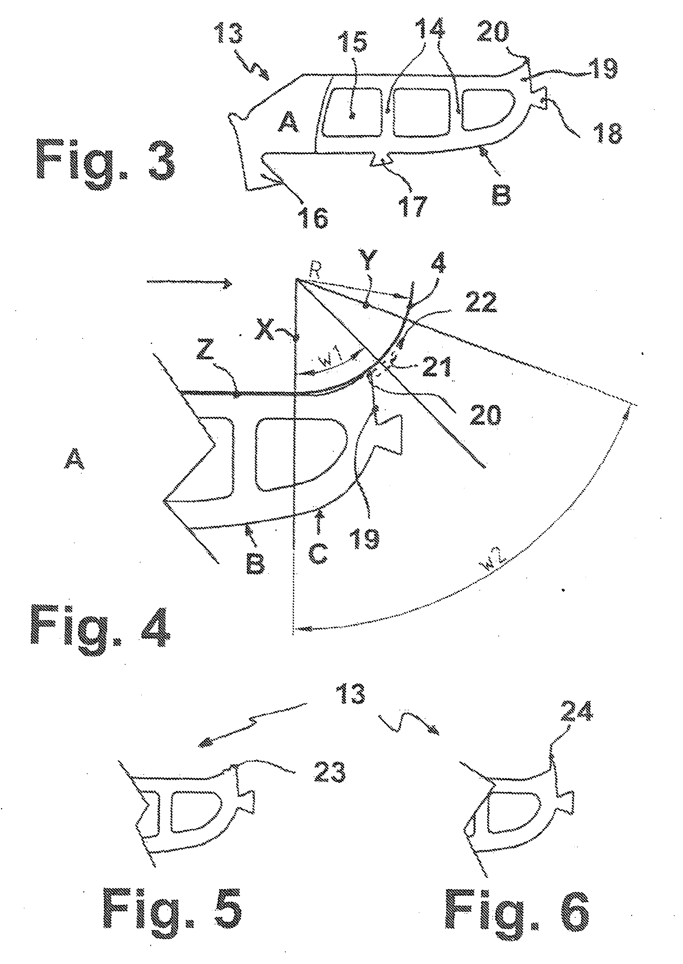

Fig. 1 zeigt eine Einrichtung 1 zur Herstellung eines Rohres (Muffenrohr), umfassend ein Verschalungsforminnenteil 2, Verschalungsformaußenteil 3 sowie eine Untermuffe 4. Auf die Untermuffe ist nun ein Dichtring 5 aus polymerem Werkstoff aufgezogen. Dieser Dichtring umfasst ein Dichtteil A und ein Schalungsteil B. Die Basiskontaktfläche Z des Schalungsteiles zur Untermuffe wird in Verbindung mit der Fig. 4 näher erläutert.

Fig. 2 zeigt nun die fertige Dichtanordnung 6 nach dem Entfernen der Verschalungsformteile 2, 3 und 4 (Fig. 1). Die Dichtanordnung selbst umfasst eine Muffe 7 mit Muffengrund 8 und Muffenspiegel 9, wobei die Muffe in einen Rohrabschnitt 10 übergeht, sowie einen Dichtring 5. Das Dichtteil A ist mit einem Verankerungsfuß 11 versehen mit festem Sitz innerhalb des Muffengrundes 8.

Ist der Dichtring 5 zweiteilig ausgebildet, so dient das Schalungsteil B nach dem Entfernen der in Fig. 1 dargestellten Verschalungsformteile häufig nur noch als Schutzelement beim Transport. Nach dem Entfernen des Schalungsteiles B entsteht zwischen dem Dichtteil A und dem Muffenspiegel 9 ein Freiraum. Beim Zusammenstecken von Muffe und Spitzende (hier nicht dargestellt) wirkt dann ausschließlich das Dichtteil A.

Die neue Einrichtung ist jedoch insbesondere für folgende Fälle konzipiert:
- Der Dichtring 5 ist zweiteilig ausgebildet, wobei das Schalungsteil B als zusätzlich wirkender Dichtring nicht entfernt wird.
- Der Dichtring 5 ist einteilig ausgebildet, wobei Dichtteil A und Schalungsteil B im Rahmen eines einstückigen Gesamtverbundes (Einheitsextrudat) aus dem gleichen Werkstoff bestehen.
- Der Dichtring 5 ist einteilig ausgebildet, und zwar in Form eines Co-Extrudates.

Der in Fig. 2 dargestellte Kragen 12 des Schalungsteiles B weist eine erhebliche Erstreckungsdimension auf, hier sogar unter Erfassung des gesamten Muffenspiegels 9. Diese Kragenkonstellation ist Stand der Technik und in Bezug auf die Aufgabenstellung zu vermeiden.

Das neue Einrichtungskonzept wird nun in Verbindung mit den Fig. 3 bis 9 näher erläutert.

Nach Fig. 3 umfasst der einteilige Dichtring 13 ein Dichtteil A und Schalungsteil B in Form eines Co-Extrudates. Das Schalungsteil ist dabei mit zwei Profilstegen 14 unter Ausbildung von drei Ringkanälen 15 versehen. Das Dichtteil A ist ferner mittels eines Verankerungsfußes 16 fest im Muffengrund verankert. Das Schalungsteil B wiederum ist mit zwei Verankerungsfüßen 17 und 18 ausgestattet, und zwar mit festem Sitz innerhalb des Muffengrundes bzw. Muffenspiegels. Das Schalungsteil B ist im Bereich des Muffenspiegels zudem mit einem Kragen 19 mit Enddichtpunkt 20 ausgestattet, der im Vergleich zu dem Kragen 12 (Fig. 2) nur noch kleindimensioniert ist.

Fig. 4 zeigt das Zusammenwirken des Dichtringes 13 (Fig. 3) mit der Untermuffe 4 (Fig. 1). Die Untermuffe weist eine Basiskontaktfläche Z auf, die zugleich die Längserstreckungsrichtung (Pfeilrichtung) des Dichtringes bzw. des Muffenrohres umfasst. Mit dieser Basiskontaktfläche korrespondiert das Schalungsteil B. Die Untermuffe ist ferner mit einem Segmentbereich, umfassend eine erste Segmentbegrenzung X und zweite Segmentbegrenzung Y, versehen, der mit dem Schalungsteilende C und dem Enddichtpunkt 20 in Verbindung steht. Dieser Segmentbereich ist bei einem vorgegebenen Radius R und einer winkelbezogenen Bogenlänge W1 bzw. W2 als Kreissegment (W1/W2 > 0°, insbesondere ≥ 5°) ausgebildet. Die erste Segmentbegrenzung X (W1/W2 = 0°) verläuft senkrecht zur Basiskontaktfläche Z.

Nach dem Stand der Technik kommt der Kragen mit dem Enddichtpunkt außerhalb der zweiten Segmentbegrenzung Y, und zwar zumeist nach Ablauf eines Winkels von 90° zu liegen, was die Fig. 1 besonders verdeutlicht.

In dem Ausführungsbeispiel gemäß Fig. 4 kommt dagegen das Schalungsteilende C mit dem Kragen 19 und dem Enddichtpunkt 20 innerhalb der ersten Bogenlänge W1 von bis zu maximal 45°zu liegen. Bei einem Winkel von 0°bei einer deckungsgleichen ersten und zweiten Segmentbegrenzung X bzw. Y wäre der Dichtring kragenfrei. Vorteilhafterweise beträgt die erste Bogenlänge W1 30 bis 40°, insbesondere 35°.

Nach einem weiteren Ausführungsbeispiel gemäß Fig. 4 befindet sich das Schalungsteilende C und der Kragen 19 weiterhin innerhalb des Kreissegmentbereiches mit der ersten Bogenlänge W1, während eine dünne Dichtlippe 21 (gestrichelte Linienführung) mit dem Enddichtpunkt 22 innerhalb der zweiten Bogenlänge W2 von bis zu maximal 70° auf der Untermuffe 4 zu liegen kommt.

Optimalerweise sind jedoch die erste Bogenlänge W1 und die zweite Bogenlänge W2 gleich, so dass das Schalungsteilende C, der Kragen 19 und der Enddichtpunkt 20 bzw. die Dichtlippe 21 mit Enddichtpunkt 22 innerhalb eines kleinen Winkelbereiches von maximal 45° mit der Untermuffe 4 in Verbindung stehen.

Die Fig. 5 und 6 zeigen einen Dichtring 13 mit dem Grundaufbau gemäß Fig. 3 mit zwei verschiedenen Gestaltungsvarianten des Enddichtpunktes 23 bzw. 24.

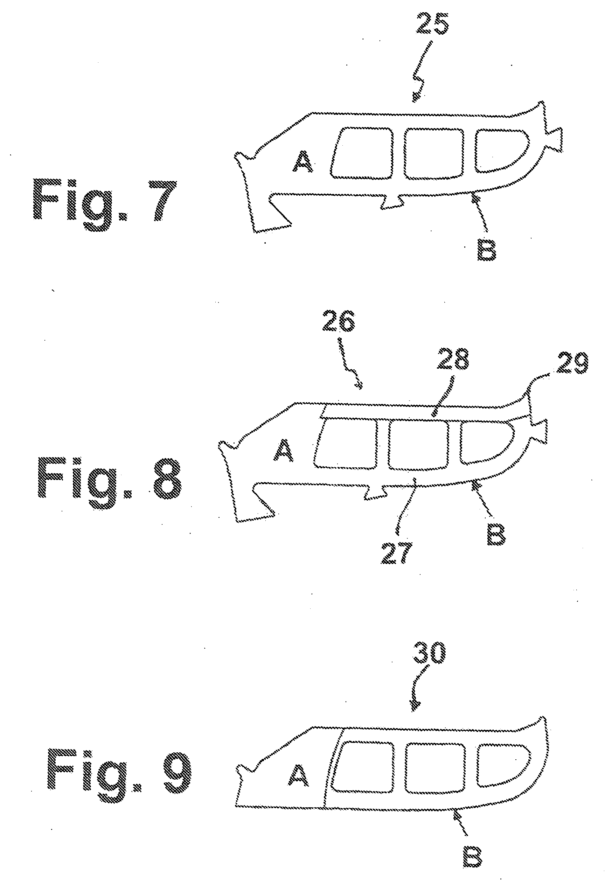

Fig. 7 zeigt einen Dichtring 25, der konstruktiv identisch ist mit dem der Fig. 3, wobei das Dichtteil A und Schalungsteil B des einteilig verankerten Dichtringes im Rahmen eines einstückigen Gesamtverbundes (Einheitsextrudat) aus dem gleichen Werkstoff bestehen.

Fig. 8 zeigt einen einteiligen verankerten Dichtring 26 in Form eines Co-Extrudates. Das Dichtteil A und der Unterbau 27 des Schalungsteiles B bilden einen einstückigen Gesamtverbund aus dem gleichen Werkstoff. Das Oberflächensegment 28 mit dem integrierten Enddichtpunkt 29 besteht aus einem anderen Werkstoff, und zwar im Rahmen einer Hart-Weich-Kombination.

Fig. 9 zeigt einen nicht verankerten einteiligen Dichtring 30 mit dem co-extrudierten Dichtteil A und Schalungsteil B, wobei beide Teile ansonsten den Grundaufbau wie der Dichtring 13 (Fig. 3) aufzeigen.

Der Radius R nach Fig. 4 beträgt wenigstens 3 mm, insbesondere wenigstens 10 mm.

Mit dieser neuen Einrichtung zur Herstellung einer Dichtanordnung für Rohre und Schachtbauwerke ist es möglich geworden, dass eine Vielzahl von Gestaltungsvarianten der Dichtringe zur Anwendung kommen kann.

### Bezugszeichenliste

(Teil der Beschreibung)
- 1: Einrichtung
- 2: Verschalungsforminnenteil
- 3: Verschalungsformaußenteil
- 4: Untermuffe (Bodenring)
- 5: Dichtring
- 6: Dichtanordnung
- 7: Muffe
- 8: Muffengrund
- 9: Muffenspiegel
- 10: Rohrabschnitt
- 11: Verankerungsfuß
- 12: Kragen
- 13: einteiliger Dichtring (Co-Extrudat)
- 14: Profilsteg
- 15: Ringkanal
- 16: Verankerungsfuß
- 17: Verankerungsfuß
- 18: Verankerungsfuß
- 19: Kragen
- 20: Enddichtpunkt
- 21: Dichtlippe
- 22: Enddichtpunkt
- 23: Enddichtpunkt
- 24: Enddichtpunkt
- 25: einteiliger verankerter Dichtring (Einheitsextrudat)
- 26: einteiliger verankerter Dichtring (Co-Extrudat)
- 27: Unterbau des Schalungsteiles
- 28: Oberflächensegment des Schalungsteiles
- 29: Enddichtpunkt
- 30: einteiliger unverankerter Dichtring (Co-Extrudat)

- A: Dichtteil
- B: Schalungsteil
- C: Schalungsteilende
- X: erste Segmentbegrenzung
- Y: zweite Segmentbegrenzung
- Z: Basiskontaktfläche
- R: Radius
- W1: erste Bogenlänge
- W2: zweite Bogenlänge

## Patentansprüche

1. Dichtanordnung (6) für Rohre und Schachtbauwerke mit
- einer Muffe (7), umfassend einen Muffengrund (8) und Muffenspiegel (9) aus Beton, Stahlbeton oder einem anderen aushärtbaren Material;
- einem Dichtring (5, 13, 25, 26, 30) aus polymerem Werkstoff, umfassend ein Dichtteil (A) und Schalungsteil (B) mit einem mit dem Muffenspiegel (9) korrespondierenden Schalungsteilende (C), das wiederum einen Enddichtpunkt (20, 22, 23, 24, 29) aufweist, wobei das Schalungsteil insbesondere härter ist als das Dichtteil;
wobei der Dichtring (5, 13, 25, 26, 30) auf eine Untermuffe (4) aufziehbar ist, wobei ferner die Untermuffe eine Basiskontaktfläche (Z) für das Schalungsteil (B), die zugleich die Längserstreckungsrichtung des Dichtringes umfasst, sowie einen sich an die Basiskontaktfläche anschließenden Segmentbereich, umfassend eine erste und zweite Segmentbegrenzung (X, Y), aufweist, der mit dem Schalungsteilende (C) und dem Enddichtpunkt (20, 22, 23, 24, 29) in Verbindung steht, wobei der Segmentbereich bei einem vorgegebenen Radius (R) und einer winkelbezogenen Bogenlänge (W1, W2), beginnend von der ersten und senkrecht zur Basiskontaktfläche (Z) verlaufenden ersten Segmentbegrenzung (X; W1/W2 = 0°) , insbesondere als Kreissegment ausgebildet ist,
**dadurch gekennzeichnet, dass**
in Bezug auf den Segmentbereich (X, Y) bzw. auf das Kreissegment mit dem vorgegebenen Radius (R)
- das Schalungsteilende (C) innerhalb einer ersten Bogenlänge (W1) von 0 bis 45° und
- der Enddichtpunkt (20, 22, 23, 24, 29) innerhalb einer zweiten Bogenlänge (W2) von 0 bis 70°
auf der Untermuffe (4) zu liegen kommen, wobei die erste und zweite-Bogenlänge (W1, W2) insbesondere > 0° sind.

2. Dichtanordnung nach Anspruch 1, **dadurch gekennzeichnet, dass** die erste und zweite Bogenlänge (W1, W2) wenigstens 5° betragen.

3. Dichtanordnung nach Anspruch 1 oder 2, **dadurch gekennzeichnet, dass** das Schalungsteilende (C) innerhalb der ersten Bogenlänge (W1) von 10 bis 40 ° zu liegen kommt .

4. Dichtanordnung nach einem der Ansprüche 1 bis 3, **dadurch gekennzeichnet, dass** der Enddichtpunkt (20, 22, 23, 24, 29) innerhalb der zweiten Bogenlänge (W2) von 20 bis 50 ° zu liegen kommt .

5. Dichtanordnung nach einem der Ansprüche 1 bis 4, **dadurch gekennzeichnet, dass** die erste und zweite Bogenlänge (W1, W2) gleich sind.

6. Dichtanordnung nach Anspruch 5, **dadurch gekennzeichnet, dass** die erste und zweite Bogenlänge (W1, W2) 30 bis 40°, insbesondere 35°, betragen.

7. Dichtanordnung nach einem der Ansprüche 1 bis 6, **dadurch gekennzeichnet, dass** der Radius (R) wenigstens 3 mm, insbesondere wenigstens 10 mm, beträgt.

## Claims

1. Sealing arrangement (6) for pipes and shaft constructions with
- a sleeve (7) comprising a sleeve base (8) and sleeve surface (9) of concrete, ferroconcrete or another hardenable material;
- a sealing ring (5, 13, 25, 26, 30) of polymeric material, comprising a sealing part (A) and formwork part (B) with a formwork part end (C) corresponding to the sleeve surface (9), which formwork part end (C) in turn has an end sealing point (20, 22, 23, 24, 29), the formwork part being in particular harder than the sealing part;
wherein the sealing ring (5, 13, 25, 26, 30) is able to be drawn up onto a lower sleeve (4), wherein in addition the lower sleeve has a base contact surface (Z) for the formwork part (B), which at the same time comprises the longitudinal extent direction of the sealing ring, and a segment region adjoining the base contact surface, comprising a first and a second segment delimitation (X, Y), which is connected with the formwork part end (C) and the end sealing point (20, 22, 23, 24, 29), wherein the segment region, with a predetermined radius (R) and an angle-related arc length (W1, W2), beginning from the first segment delimitation (X; W1/W2 = 0°) perpendicular to the base contact surface (Z), is formed in particular as a circle segment,
**characterized in that**
in relation to the segment region (X, Y) or to the circle segment with the predetermined radius (R)
- the formwork part end (C) within a first arc length (W1) of 0 to 45 ° and
- the end sealing point (20, 22, 23, 24, 29) within a second arc length (W2) of 0 to 70°
come to lie on the lower sleeve (4), the first and second arc lengths (W1, W2) being in particular > 0°.

2. Sealing arrangement according to Claim 1, **characterized in that** the first and second arc lengths (W1, W2) are at least 5°.

3. Sealing arrangement according to Claim 1 or 2, **characterized in that** the formwork part end (C) comes to lie within the first arc length (W1) of 10 to 40°.

4. Sealing arrangement according to any of Claims 1 to 3, **characterized in that** the end sealing point (20, 22, 23, 24, 29) comes to lie within the second arc length (W2) of 20 to 50°.

5. Sealing arrangement according to any of Claims 1 to 4, **characterized in that** the first and second arc lengths (W1, W2) are equal.

6. Sealing arrangement according to Claim 5, **characterized in that** the first and second arc lengths (W1, W2) are 30 to 40°, in particular 35°.

7. Sealing arrangement according to any of Claims 1 to 6, **characterized in that** the radius (R) is at least 3 mm, in particular at least 10 mm.

## Revendications

1. Dispositif d'étanchéité (6) pour des tuyaux et des ouvrages de puits comprenant :
- un manchon (7) comportant un fond de manchon (8) et un niveau de manchon (9) en béton, béton armé ou dans un autre matériau durcissable ;
- une bague d'étanchéité (5, 13, 25, 26, 30) à base de matériau polymère, comprenant une partie d'étanchéité (A) et une partie de coffrage (B) avec une extrémité de partie de coffrage (C) correspondant au niveau du manchon (9), qui présente à son tour un point d'étanchéité final (20, 22, 23, 24, 29), la partie de coffrage étant en particulier plus dure que la partie d'étanchéité ;
la bague d'étanchéité (5, 13, 25, 26, 30) pouvant être tirée sur un sous-manchon (4), le sous-manchon présentant également une surface de contact de base (Z) pour la partie de coffrage (B), qui comporte en même temps la direction d'extension longitudinale de la bague d'étanchéité, ainsi qu'une zone de segment se raccordant à la surface de contact de base, comprenant une première et une seconde limitations de segment (X, Y), laquelle zone est en liaison avec l'extrémité de partie de coffrage (C) et le point d'étanchéité final (20, 22, 23, 24, 29), la zone de segment étant conçue avec un rayon (R) prédéfini et une longueur d'arc (W1, W2) rapportée à l'angle, en démarrant avec la première limitation de segment (X ; W1/W2 = 0°) agencée perpendiculairement à la surface de contact de base (Z), en particulier sous forme de segment de cercle,
**caractérisé en ce que**, par rapport à la zone de segment (X, Y) ou au segment de cercle avec le rayon (R) prédéfini,
- l'extrémité de partie de coffrage (C) vient se positionner à l'intérieur d'une première longueur d'arc (W1) de 0 à 45° et
- le point d'étanchéité final (20, 22, 23, 24, 29) à l'intérieur d'une seconde longueur d'arc (W2) de 0 à 70°
sur le sous-manchon (4), la première et la seconde longueurs d'arc (W1, W2) étant en particulier supérieures à 0°.

2. Dispositif d'étanchéité selon la revendication 1, **caractérisé en ce que** la première et la seconde longueurs d'arc (W1, W2) sont d'au moins 5°.

3. Dispositif d'étanchéité selon la revendication 1 ou 2, **caractérisé en ce que** l'extrémité de partie de coffrage (C) vient se positionner à l'intérieur de la première longueur d'arc (W1) de 10 à 40°.

4. Dispositif d'étanchéité selon l'une quelconque des revendications 1 à 3, **caractérisé en ce que** le point d'étanchéité final (20, 22, 23, 24, 29) vient se positionner à l'intérieur de la seconde longueur d'arc (W2) de 20 à 50°.

5. Dispositif d'étanchéité selon l'une quelconque des revendications 1 à 4, **caractérisé en ce que** la première et la seconde longueurs d'arc (W1, W2) sont identiques.

6. Dispositif d'étanchéité selon la revendication 5, **caractérisé en ce que** la première et la seconde longueurs d'arc (W1, W2) sont égales à 30 jusqu'à 40°, en particulier 35°.

7. Dispositif d'étanchéité selon l'une quelconque des revendications 1 à 6, **caractérisé en ce que** le rayon (R) est d'au moins 3 mm, en particulier d'au moins 10 mm.
